# EUROPEAN PATENT SPECIFICATION

(11) **EP 2 783 567 B1**
(45) Date of publication and mention of the grant of the patent: **08.03.2017**
(21) Application number: 14162382.7
(22) Date of filing: 28.03.2014
(51) Int. Cl.: A01K 5/00, A01F 25/20, A01K 5/02, B66C 3/04, A01F 29/00

(54) **Device for processing fodder**
Vorrichtung zur Behandlung von Futter
Dispositif de traitement du fourrage

(30) Priority: 28.03.2013 NL 2010541; 29.08.2013 NL 2011357
(43) Date of publication of application: 01.10.2014
(62) Divisional of application: 14187355.4
(73) Proprietor: Liet, 7581 TJ Losser (NL)
(72) Inventor: Liet, Cornelis Hendricus, 7581 TJ Losser (NL)
(74) Representative: De Vries & Metman

(56) References cited:
- EP-A1- 1 516 530
- EP-A1- 2 191 714
- WO-A1-2008/097080
- WO-A1-2008/118005
- DE-A1- 2 611 648
- DE-A1- 3 510 401
- DE-A1- 3 815 229
- DE-A1- 4 327 864
- FR-A1- 2 874 477
- NL-A- 7 503 185
- US-A- 938 338
- US-A- 2 176 921
- US-B1- 6 347 464

## Description

The invention relates to an apparatus for processing feed for livestock, such as feed from bales or blocks of feed or loose feed or crop, more particularly for separating and dosing feed.

Feed, such as silage, can be made up of grass, mixtures of grass and clover, cereals such as wheat, barley or mixtures thereof or mixtures of cereals with peas or beans. Cut silage compacted in a silage pit is usually referred to as "blocks", while feed compacted in a baling press is usually referred to as "bales". On compacting a layered structure is formed.

Lely markets an automatic feeding system under the trade name Vector®, which has been described int. al. in the publication "Lely voedt automatisch" ("Lely's automatic feeding"), G. Zevenbergen, published in Veehouderij Techniek, June 2012. This system involves blocks of feed being deposited in a feed kitchen. A grabber grabs feed from a block to put it in a mixing carriage. In the mixing carriage the feed, originating from different blocks, is mixed and conveyed to the livestock to be fed. For each quantity of separated feed the grabber has to be moved back and forth to the mixer. This has to be done at a moderate speed in order to prevent the suspended grabber from swinging. Only when the grabber is finished and has loaded all required feed components into the mixer can the mixer convey the feed to a feeding alley. Hence a lot of time is needed to mix the feed from the bales and convey it to the feeding alley. The grabber is comparatively heavy and impossible to control precisely and for instance can easily land on the bale at an angle, as a result of which the bale can be damaged and partially fall apart. The quantity of material grabbed by the grabber cannot be dosed precisely. The space between the grabber and the mixer varies. Starting, slowing down and positioning the grabber takes up a lot of time.

Separating feed from a bale or block should be done in such a way that the structure of the remaining part of the block or bale remains intact and does not break off in order to prevent oxygen from intruding in the bale and setting decomposition processes in motion. Using a grabber can cause the blocks to break and fall apart, as a result of which the remaining feed will decompose more quickly. Also, such a grabber makes precise dosing impossible. Furthermore, feed will fall from the grabber when it is moved to the mixing carriage. Nor is the grabber able to properly pick the last remnants of the block off the floor. Feed remnants left behind may start to ferment and accelerate the spoiling of the other feed in the feed kitchen. Because of this the feed kitchen will need to be cleaned and restocked on a regular basis.

FR 2,874,477 discloses a mixer for processing feed for livestock. The mixer comprises a trailer with a grabber and a collection bin. Similar devices are disclosed in DE 38 15 229, EP 1 516 530 A1 and DE 35 10 401 A1. These carriages have to driven away first before they can be moved to a next row of bales, e.g., of another feed type.

The present invention has for its object to provide a system which will enable automatic collection of feed, for instance from blocks or bales or loose feed, efficiently and quickly, as well as precise dosing thereof.

The object of the invention is attained with an apparatus according to claim 1.

Thus the grabbing device and/or the collecting bin can be moved horizontally between a first position, where the grabber is placed above the collecting bin, and a second position, where the grabber can be positioned above a bale or block. In order to be able to move the main frame with the grabbing device to a next row of bales or blocks, the apparatus is provided with a cross conveyor. This cross conveyor can for instance be made up of a plate which can be moved sideways along a guide, such as a floor rail. The main frame can be disposed on the plate and then be moved sideways to a next row of bales or blocks.

In a special embodiment the apparatus comprises:
- a main frame with a feed pick-up zone;
- a collecting bin supported by the main frame;
- a support frame, which can be moved horizontally along a guide on the main frame between a first position where the support frame is positioned over the feed pick-up zone and a second position above the collecting bin position;
- a grabbing device, which can be moved vertically along a guide in the support frame.

When a bale or block or a quantity of loose feed is within the range of the grabbing device, the grabbing device can be moved downwards to separate feed from the top of the bale or the block. Next, the support frame with the grabbing device can be moved to the position above the collecting bin to then put the separated feed in the collecting bin. Next, the support frame with the grabbing device can be repositioned above the feed pick-up zone in order to remove more feed from the same block or bale, or from a new block or bale or, optionally, from a stock of uncompacted feed. Once all desired feed components have been collected in the collecting bin in the desired quantities, the collecting bin can be emptied into a mixer. Preferably, the contents of the collecting bin are essentially the same as those in the mixer, so that the collecting bin is able to fill the mixer in one go. When the mixer is subsequently moved to the livestock to be fed, the collecting bin can be refilled at the same time. Because the mixer and the collecting bin can be used simultaneously, the system's capacity is doubled.

The grabbing device can be moved back and forth more rapidly between the bale and the collecting bin than in the case of grabbers from older systems. After the collecting bin has been emptied into the mixer, the grabbing device can continue straightaway with separating feed, without having to wait for the return of the mixer, which also brings time savings.

The collecting bin can for instance be moved, for instance tilted, into an outfeed position for feeding out feed. The feed can thus be put into a mixing bin, such as a stationary mixer or a mixing robot, or onto an outfeed conveyor or similar outfeeding means. In this process the feed can for instance be mixed with other feed components.

The apparatus can for instance be configured such that the collecting bin can be moved vertically by means of a vertical guide between a bottom position and a top position, in which process the collecting bin when in the top position can be tilted into the outfeed position. In such an embodiment the collecting bin can be placed low down, so that even in low positions, when the bale or the block is nearly finished, the grabbing device is still able to put the separated feed in the collecting bin.

In addition, the grabbing device can comprise separating means, such as one or more saws or milling rollers, for separating the cut-off top layer. The feed material thus is reduced in size and as a result can be mixed more easily and more rapidly.

The grabbing device can for instance comprise claws, each provided with a base plate with a cutting edge for cutting off a horizontal top layer from the bale. The claws can be moved between an open position, where the grabbing device can be positioned over a bale or block, and a grabbing position, where the grabber is closed. The claws can for instance be L-shaped or J-shaped in cross-section.

In a specific embodiment the L- or J-shaped claws can be provided with side walls with a cutting face connecting the outermost points of the L- or J-shape with one another. As a result, the cutting faces of two opposing claws connect up when the grabbing device is closed and it is no longer possible for feed to fall out. Because the side walls of the claws cut through the feed themselves, individual separating means are no longer required.

In a special embodiment the claws comprise knives which extend the full length of the cutting edges of the side walls and which can be moved up and down by means of a guide in a direction parallel to the cutting edge as the claws move between the resting position and the grabbing position. The feed is easier to cut off as a result.

The claws can for instance be provided with slots for receiving ejector plates, which are mounted to the support frame and extend in a direction parallel to the direction of movement of the claws between the resting position and the grabbing position. This way the feed that is placed inside the claws is ejected from the claws by the ejector plates during unloading. In order to have the bottom edge of the claws travel along a straight line as much as possible during movement of the claws, the movement can be guided by means of a curved horizontal slotted guide corresponding to the guide as discussed above in relation to the circular saws. The advantage of a straight path of movement is that the last remnants of feed can be removed from the floor more easily by the claws.

The claws can for instance be positioned in two opposing rows. In a special embodiment the claws can be moved independently of each other between the resting position and the grabbing position. This way precise dosing is enabled. When only a small quantity of feed is needed, it is not necessary to cut off an entire top layer, but only a part thereof.

In the case of such a grabbing device the means for reducing the size of the feed can for instance be made up of parallel saws, which can for instance be moved between the claws. The saws can for instance comprise circular saws, which can be moved along a guide to thus pass through the cut-off layer of feed. The circular saws in that case can be moved in a flat, straight horizontal line. This can be achieved for instance with a drive rod coupled to rotating shaft of the circular saws, with a top end of the drive rod pivoting around a top shaft which can be moved up and down along a vertical guide in het support frame. In that case a second guide component of the drive rod disposed between the top shaft and the sawing shaft can be moved back and forth by means of a second guide between two outermost points on a horizontal line, with the second guide being curved such that the circular saws can be moved back and forth in a straight line. A horizontal movement of the circular saws causes the feed of the cut-off top layer to be separated, after which it can be dosed and mixed precisely.

In order to reduce the risk of separated feed sticking to the saw teeth, the circular saw can be provided with comparatively short cutting teeth. Thus the cutting teeth can protrude for 8 mm or less, for instance 4 mm or less, vis-à-vis the inner diameter of the saw teeth. Good results are obtained for instance with teeth of 3 - 4 mm in length.

The inner diameter can for instance be 600 mm or more, for instance 700 mm or more. The length of the cutting teeth can for instance be adjustable, or it can be fixed.

In a more specific embodiment of the circular saw the angle η between the extension L of the cutting edge of the saw tooth and the radial line between the centre M of the saw blade and the outermost vertex N of the saw tooth can be an acute angle, for instance an angle of 0 < η < 25 degrees.

The tip of the cutting tooth cuts and pulls on the crop to be separated. By keeping the cutting teeth short, the overall pulling power is limited, so that the circular saw will no longer get easily stuck. Preferably, the length of the cutting teeth is such that in the case of optimum saw speed for a particular type of feed, the net pulling power of the joint meshed teeth is such that the feed to be processed is pulled towards the saw without the saw getting stuck in the feed. The optimum speed varies per type of feed. Thus dry hay or straw will require a slower speed, while in the case of for instance maize a higher speed can be employed. Because the saw pulls the feed towards it, the saw need not exert as much forward pressure on a block or bale or other type of feed. Particularly good results are attained if the cutting teeth protrude vis-à-vis the circular contour of the saw blade which at least near the cutting teeth, or in its entirety, is continuously circular, that is to say without a serrated pattern between the teeth such as is customary for ordinary circular saw blades.

If use is made of a standard circular saw blade with deeper teeth, then the bottom section of the teeth can be covered by means of a flat ring. The tips of the teeth will then protrude vis-à-vis the ring, for instance over 8 mm or less, such as for instance 3 - 4 mm. The outer circumference of the ring thus effectively forms the inner diameter of the saw teeth. In order to keep the required cutting pressure low, such a ring preferably has a chamfered outer circumference. Alternatively, the ring can have a flattened inner circumference.

The collecting bin can preferably be moved from a collecting position, for instance be tilted or lifted, to an outfeed position for feeding out feed.

In a special embodiment the collecting bin is provided with a bottom comprising an outfeed conveyor, which continues on an outfeed side of the collecting bin outside the outfeed bin. As a result the feed can be dumped gradually and in doses from the collecting bin, for instance into a mixing bin, such as a mixing robot.

To enable proper alignment of the grabbing device with the bale or block of feed to be processed, the grabbing device placed low down can be moved in a horizontal alignment direction transverse to the horizontal transport direction. To next be able to recentre the grabbing device vis-à-vis the collecting bin, the main frame can be provided with a centring guide for centring the grabbing device vis-à-vis the main frame when the grabbing device is moved vertically upwards.

The main frame, which preferably is provided with wheels, can for instance be moved with the aid of a pulling component between a retracted position, where the main frame has been wheeled onto the plate, and an extended position, where the main frame has been wheeled off the plate. Such a pulling component can for instance comprise a folding frame which on being collapsed pulls the main frame onto the plate and on being unfolded pushes the main frame off the plate. Such a folding frame can for instance comprise a first leg or window with a bottom end connected to the plate and a top end hinged to the top end of a second leg or window with a bottom end connected to the main frame. Such a folding frame enables very precise positioning of the main frame with the grabber and the collecting bin.

To enable precise dosing of the feed to be separated, the frame can be provided with one or more weighing means.

The frame can for instance be provided with wheels, such as swivel wheels. The wheels can be provided with one or more weighing bars. Also, the wheels can be provided with a driving mechanism.

The grabber may for example be provided with two grabber components having bottom edges facing one another, wherein the two grabber components can be moved vis-à-vis one another between an open position, where the bottom edges have been moved apart, and a closed position, where the bottom edges abut against one another and the grabber components enclose a grabbing zone, wherein at
least one of the grabber components is provided with one or more separating means inside a grabbing zone enclosed by the grabber components. Such separating means can for instance take the form of one or more knives, for instance a row of parallel circular knives or circular saws on a common drive shaft. Thus the two grabber components can be provided with a row of parallel circular knives or circular saws. The two rows of circular saws can have moved in axial direction vis-à-vis one another, so that in the closed position of the grabber the circular saws of one row partially overlap with the circular saws of the other row in side view of the grabber.

The two grabber components can for instance each be tilted around their own pivot, with the two pivots being parallel. For synchronisation of the movement of the grabber components, the two grabber components can be provided with toothed segments, with the toothed segments of the two grabber components meshing together. Such a toothed segment can for instance extend from the pivot in the direction of the toothed segment of the other grabber component, with the two toothed segments being provided in mirror image with teeth of such curvature and length that the two sets of teeth mesh together as the grabber components move between the open position and the closed position.

In addition, the grabbing device can comprise a frame with a slotted guide for the two grabber components along which the grabber components are moved up and down as they move between the open position and the closed position of the grabber, such that the cutting edges follow an essentially horizontal path.

The invention will be elucidated further with reference to the drawings. Herein:
- Figure 1:: is a schematic representation in side view of an apparatus according to the invention;
- Figure 2:: is a partial representation of the apparatus of Figure 1 in cross-section;
- Figure 3:: is a representation in front view of the grabbing device of the apparatus of Figure 1 with the protective cover removed in part;
- Figure 4:: is a schematic representation in cross-section of another exemplary embodiment of the apparatus according to the invention;
- Figure 5:: is a second representation in cross-section of the apparatus of Figure 4;
- Figure 6:: is a schematic representation of the position of the circular saws between the claws;
- Figure 7:: is a schematic representation of an alternative embodiment of the apparatus according to the invention;
- Figure 8:: is a schematic representation in top view of the apparatus of Figure 1 in a feed kitchen;
- Figure 9:: is a schematic representation in cross-section of a further potential embodiment of the apparatus according to the invention;
- Figure 10:: is a representation of a longitudinal section along the line X - X in Figure 9;
- Figure 11:: is a schematic representation of the apparatus of Figure 1 with a bin of loose feed;
- Figure 12:: is a schematic representation of another potential embodiment of an apparatus according to the invention;
- Figure 13:: is a representation of a further potential embodiment;
- Figure 14:: is a representation of an opened grabbing device of the apparatus according to Figure 13;
- Figure 15:: is a representation of the grabbing device of Figure 14 in the closed position;
- Figure 16:: is a representation in side view of a main frame of the apparatus of Figure 13;
- Figure 17;: is a representation of the main frame of Figure 16 in rear view;
- Figure 18: is a representation in side view of the apparatus of Figure 13 in the retracted position;
- Figure 19:: is a representation in side view of the apparatus of Figure 13 in the extended position;
- Figure 20:: is a representation in front view of a circular saw such as used in the apparatus of Figure 13;
- Figure 21:: is a representation of the circular saw of Figure 20 in side view;
- Figure 22:: is a representation in side view of Figure 18 with the collecting bin put in the outfeed position;
- Figure 23:: is a representation of a further potential embodiment of an apparatus according to the invention;
- Figure 24:: is a representation of the apparatus of Figure 23 in side view with the folding frame collapsed.

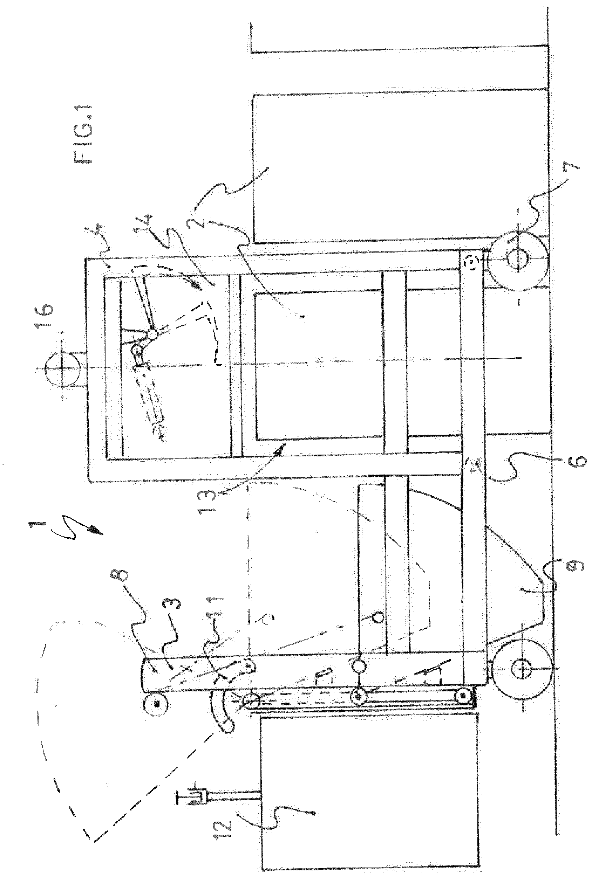

Figure 1 shows an exemplary embodiment of an apparatus 1 according to the invention for processing feed, such as loose feed or feed in the form of bales or blocks 2. The apparatus 1 comprises a mobile main frame 3 with a support frame 4 which can be moved horizontally vis-à-vis the main frame 3 by means of a roller guide 6 near the under-side of the main frame 3. The main frame 3 is provided with swivel wheels 7. At one end the main frame 3 comprises a vertical guide 8, along which a collecting bin 9 can be moved vertically between a bottom position - shown as a continuous line in Figure 1 - and a top position - shown as a dotted line. In the top position the collecting bin can be tilted by means of a tilting guide 11.

This way the collecting bin 9 can be tipped to empty it, for instance into a mixing bin or mixing robot 12, such as shown in Figure 1.

At the other end the frame 3 comprises a feed pick-up zone 13, where a bale or block of feed 2 can be picked up by positioning the apparatus 1 such that the support frame 4 is positioned over the block or the bale 2 in question.

The support frame 4 carries a grabbing device 14, which can be moved downwards from a resting position such as shown in Figure 1, driven by an electromotor 16 or similar driving mechanism arranged on top of the support frame.

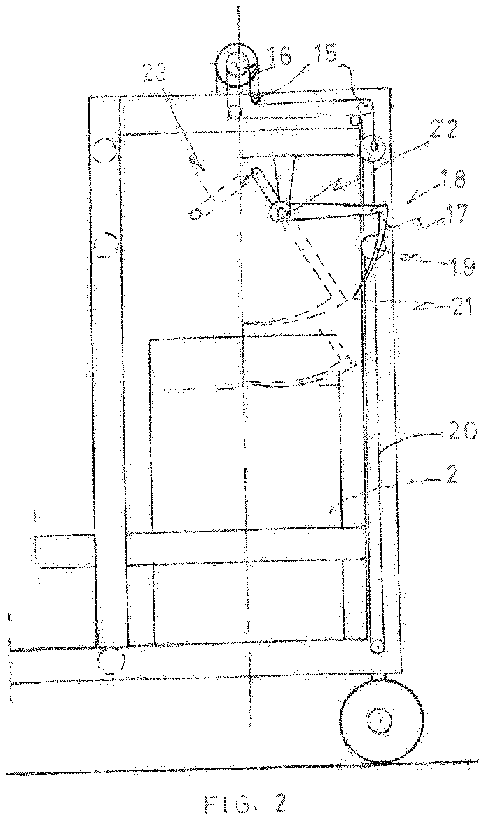

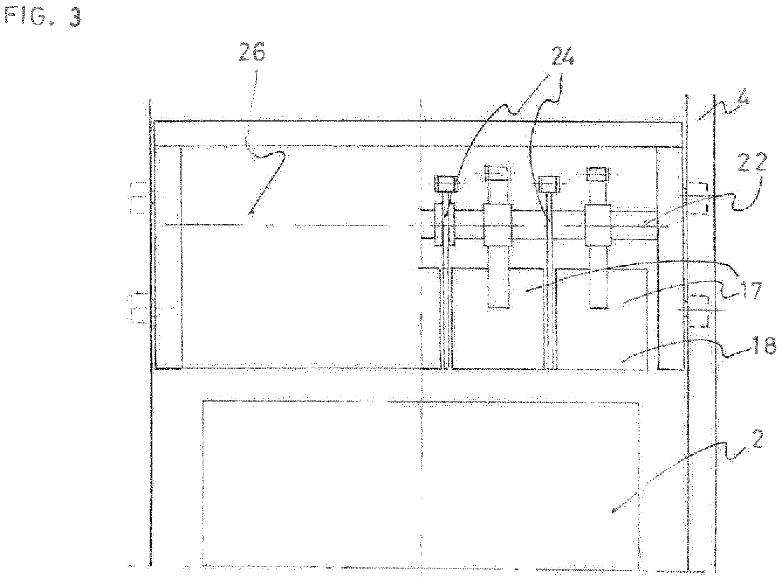

The grabbing device 14 comprises two opposing rows of L-shaped claws 17, such as shown in Figures 2 and 3. Each claw 17 is provided with a back plate 18 and a base plate 19 extending from the bottom edge of the back plate 18 in the direction of the opposing row of claws 17. At the free end the base plate comprises a cutting edge 21 for cutting off a horizontal top layer of the bale 2. The claws 17 can be pivoted around a pivot 22 between a resting position where the claws 17 can be positioned over the top of a bale or block 2, and a grabbing position where the cutting edges 21 of the claws 17 penetrate into the bale 2 and cut off a top layer. In Figure 2 the claw 17 is shown in the resting position, represented as a continuous line, while the grabbing position is represented as a dotted line. The claws 17 in that case are propelled individually with the aid of hydraulic cylinders 23 under the control of a control unit (not shown).

In Figure 3 the row of claws 17 is shown in the operating position in front view. If only a small quantity of feed is required, the control unit will trigger only part of the claws 17 to cut off part of the top layer of the block or the bale.

In between the claws 17 the grabbing device 14 comprises parallel circular saws 24 for separating the cut-off top layer of the bale 2. After the claws 17 have sliced off the top layer of the block or the bale 2, the circular saws 24 saw the slice, causing it to fall apart into loose dosable feed.

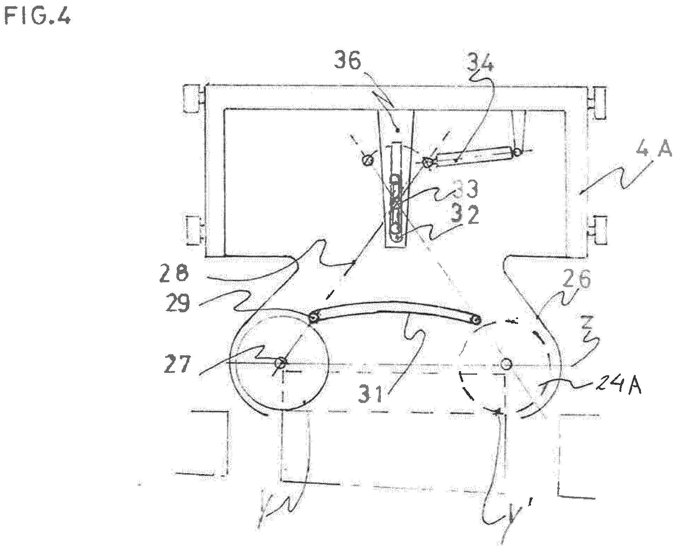

An enveloping protective cover 26 is arranged around the claws 17 and the circular saws 24. The protective cover 26 is shaped such that the claws 17 and the circular saws 24 can be moved in the various operating and resting positions, such as is illustrated in Figure 4 for another potential embodiment of the apparatus.

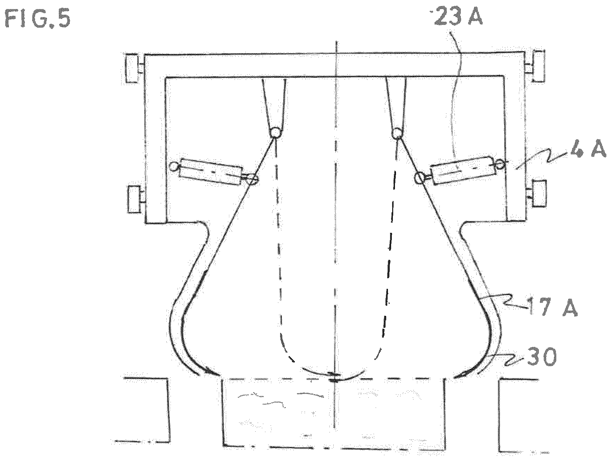

The apparatus of Figure 4 comprises a row of circular saws 24A which can be moved by means of slots between claws 17A (see Figure 5). The circular saws 24A are capable of rotation around a common shaft 27 and are moved with the aid of a connecting rod 28, schematically represented by means of a centre line. The connecting rod 28 comprises a bottom roller guide 29, which can move along a curved bottom guide 31 in the enveloping protective cover 26, and a top shaft 33, which can move along a vertical guide 32 positioned symmetrically above the bottom guide 31 in an arm 36 of the support frame 4A. The two outermost points of the guide 31 are in an essentially horizontal straight line. Between the outermost points the guide 31 is bent upwarts. At the top end the connecting rod 28 is driven by a hydraulic cylinder 34. The cylinder 34 moves the top end of the connecting rod 28 back and forth, which movement is converted by means of the guides 31, 32 into a reciprocal movement of the circular saw 24. The horizontal guide 31 is bent such that the circular saws 24A are moved back and forth in a straight line Z between a first outermost position - illustrated in the drawing as the continuous line Y - and a second outermost position - illustrated in the drawing as the dotted line Y'.

Figure 5 shows a different cross-section of the apparatus of Figure 4. This cross-section shows the claws 17A, which in this embodiment comprise a curved bottom end 30. The claws are hinged to suspension points 25 of the support frame 4A and can be moved in one another's direction by means of cylinders 23A.

In another potential embodiment also the claws 17, 17A can be moved up and down by means of a vertical guide. As a result of this the last remnants of feed on the floor can be removed more easily, so that as little residual feed as possible is left on the floor.

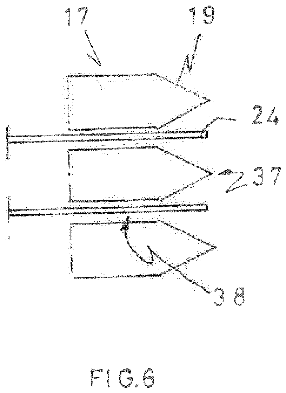

Figure 6 is a schematic representation of the positioning of the parallel circular saws 24 between the claws 17. The cutting edges 21 of the base plates 19 are configured as triangular points 37 to allow a better penetration into the compacted feed. The circular saws 24 are positioned in a slot 38 between the claws 17 in a position which is always midway between two points 37, because there the feed will concentrate when the claws 17 are pushed along through the compacted feed. The tips of the teeth can be rounded to ensure that less feed sticks to the knives.

After the claws 17 have cut off the top layer of a bale or block 2, the circular saws 24 separate the top layer into dosable feed. The claws 17 remain in the grabbing position and in doing so keep the separate feed together. The grabbing device 14 is put in the top position with the aid of a motor drive 16 and steel cable 20 guided along of a pulley guide 15. Next, the support frame 4 driven by a hydraulic cylinder (not shown) is moved to the collecting bin 9, which is in the top position. When the support frame 4 with the grabbing device 14 has been positioned above the collecting bin 9, the claws 17 are moved apart and the separated feed falls into the collecting bin 9. Next, the support frame 4 with the grabbing device 14 is returned to the original position, where the support frame 4 can be placed over a bale 2 once again.

In addition, the apparatus 1 is provided with weighing means, made up of weighing bars at the swivel wheels 7 (not shown). This enables the quantity of separated feed in the collecting bin 9 and between the claws 17 of the grabbing device 14 to be weighed precisely. The control unit can be programmed to make a continuous comparison bewteen the weighed quantity of separated feed in the apparatus 1 and a value for the required quantity of feed entered beforehand. As soon as the desired quantity has been collected, the control unit can put the grabbing device 14 in the resting position.

To empty the collecting bin 9, the apparatus 1 can travel to the mixer 12 and/or the mixer 12 can be moved to the apparatus 1. The collecting bin 9 can then be tilted from the highest position to the outfeed position, where the feed from the collecting bin 9 is put in the mixer 12. If so desired, the feed in the mixer 12 may be mixed with further feed components.

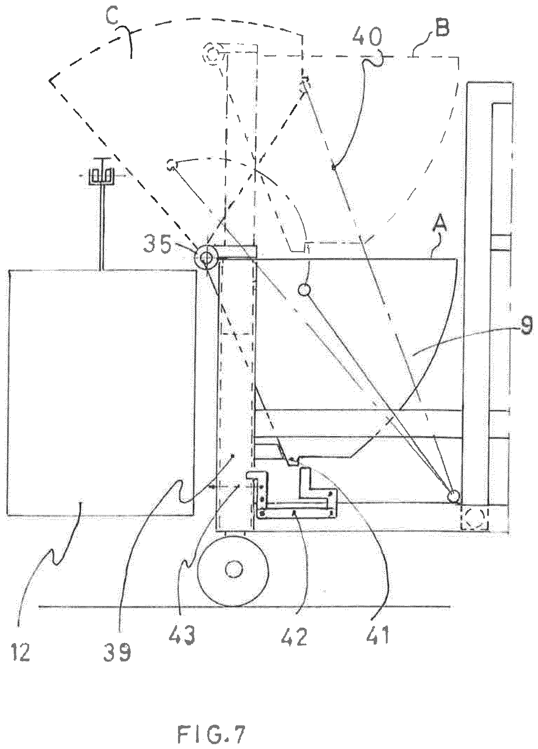

Figure 7 shows an alternative embodiment where the collecting bin 9 is connected with a hinged flange 35 to a vertical hydraulic cylinder 39, which can move the collecting bin 9 between a collecting position A (shown as a continuous line) and a high position B (shown as a dotted line). In the high position B the collecting bin 9 can be moved over a bale or block, so that the apparatus as a whole can be positioned over a row of bales. From the low collecting position A the collecting bin 9 can be tilted with the aid of a schematically represented second cylinder 40 into an unloading position C, also shown as a dotted line. This is the position in which the collecting bin is tipped to empty it, for instance into a mixer or mixing robot 12.

On the under-side the collecting bin 9 is provided with a boss or ridge 41. A tilting lock 42 hooks behind the ridge 41 in order to prevent the collecting bin 9 from tipping inadvertently. Using a schematically represented third cylinder 43, the lock 42 can be tilted to one side, whereupon the collecting bin 9 can be tipped.

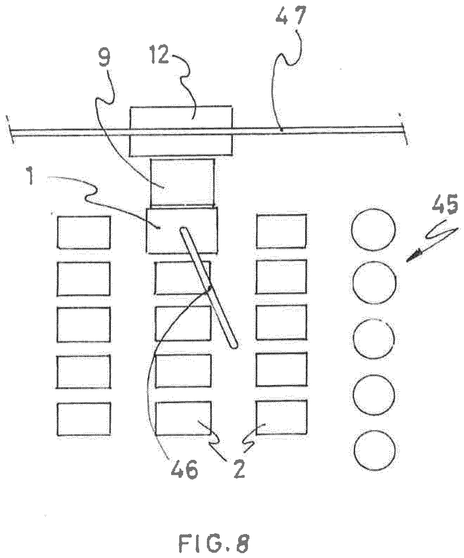

Figure 8 is a schematic representation in top view of a feed kitchen 45 in which an apparatus 1 is arranged. In the feed kitchen 45 there are rows of bales or blocks 2 of different types, both round bales and rectangular bales or blocks. The apparatus 1 is connected to a power cable 46 which can be rolled automatically and is pivotably connected to a suspension means. A mixer 12 can be moved on a rail guide 47 or can travel across the floor. The apparatus 1 ispositioned over a front bale 2 of the central row of rectangular bales or blocks.

Different types of feed are cut off different bales or blocks and are weighed and collected in the collecting bin 9 of the apparatus 1 until the collecting bin 9 contains a complete feed mixture of the desired composition. Next, the apparatus 1 travels to a station where the composition is dumped into the mixer 12. If the mixer 12 has not yet returned from a previous feeding alley, the apparatus 1 will await the return of the mixer 12.

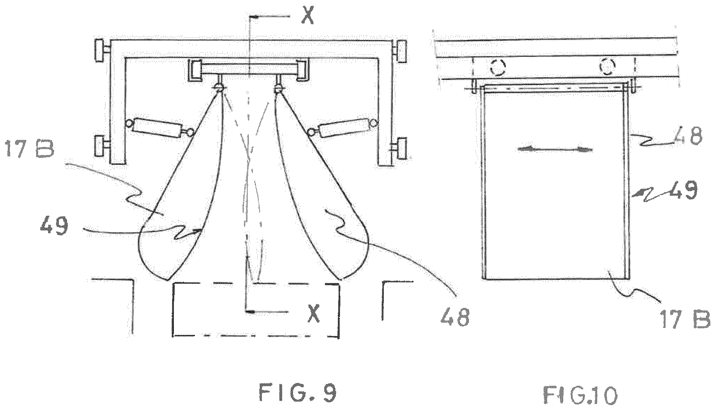

Figures 9 and 10 show an alternative embodiment of an apparatus according to the invention. The embodiment is the same as the embodiment of Figure 5, except that the claws 17B are provided on either side with side walls 48 each provided with a cutting edge 49. The cutting edges 49 connect the outermost points of the J-shaped claws 17B. This enables the claws 17B to cut through the feed themselves and no separate circular saws or other separating means are required. The cutting edges 49 are curved, so that they overlap with each other to some extent in the closed position of the claws 17B. The cutting edges can for instance be serrated or curved to prevent the crop from sliding down the cutting edges 49.

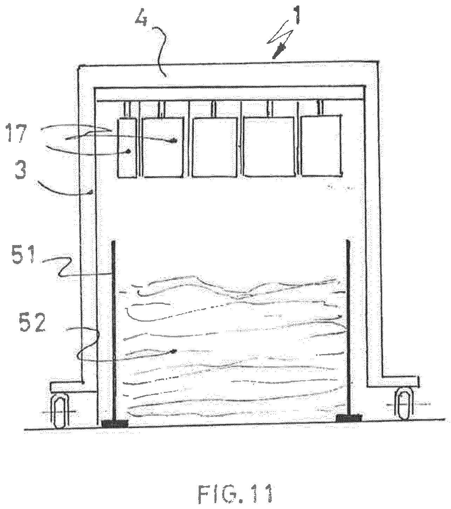

Figure 11 is a schematic representation of the apparatus 1 of Figure 1 with a bin or container 51 disposed in the feed pick-up room 13 beneath the claws 17 of the support frame 4. The bin 51 is filled with loose crop 52. The claws 17 can be moved downwards to grab the loose crop and lift it. The support frame 4 can then be moved in the frame 3 to the collecting bin. Next, the claws 17 can put the collected loose crop in the collecting bin 9.

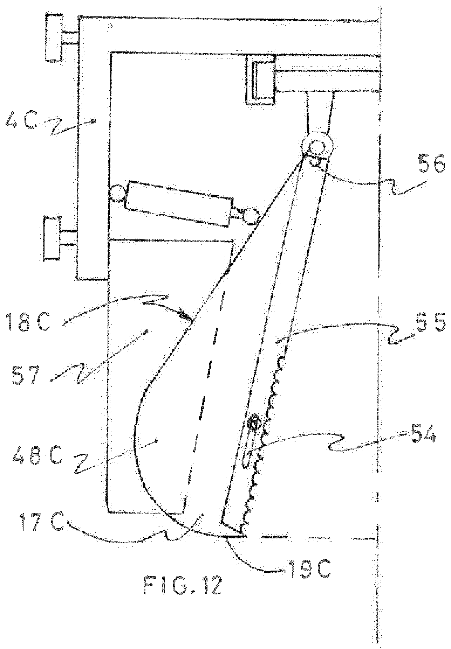

Figure 12 shows a further variation wherein the claws 17C are provided with side walls 48C which are provided with a knife 55 on their free edge. By means of a crankshaft transmission 56 or driven by, for instance, a hydraulic cylinder, the knife 55 is moved up and down along the edge of the side wall 48C of the claw 17C by means of a guide 54 as the claw 17C pivots. This makes cutting the feed off easier. The cutting edge of the base plate 19C can also be provided with such a reciprocating knife.

The apparatus further comprises ejector plates 57, which are mounted essentially at right angles to the back plate 18C of the claw. The ejector plates 57 are connected to the support frame 4C. The back plate 18C of the claw comprises slots (not shown) through which the ejector plates protrude. When the claw 17C is moved back and forth, the ejector plates 57 slide into the interior of the claw 17 via the slots. When unloading the feed into the collecting bin, the feed is thus ejected by the ejector plates.

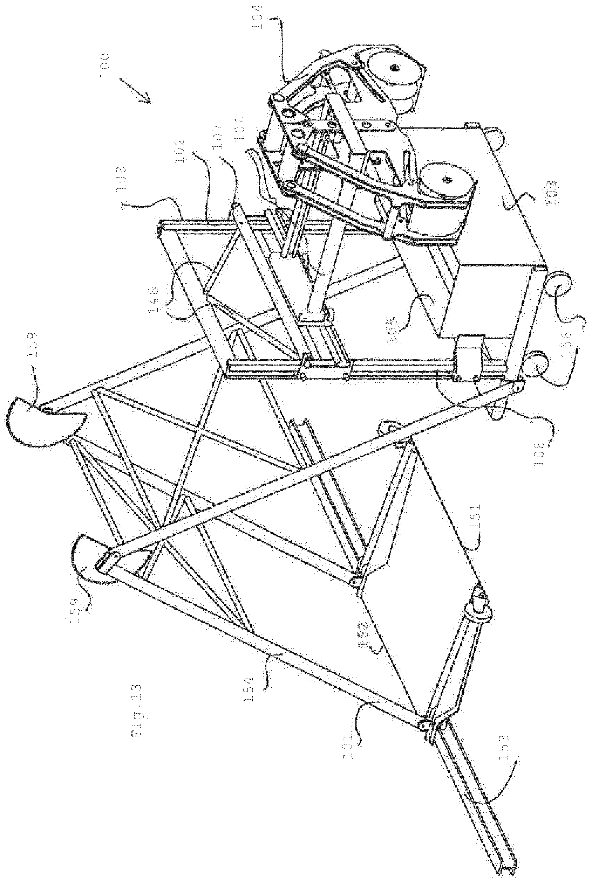

Figure 13 shows a further potential embodiment of an apparatus 100 for processing feed comprising a cross conveyor 101 and a mobile main frame 102 supporting a collecting bin 103 and a grabbing device 104.

The grabbing device 104 can be moved horizontally vis-à-vis the main frame 102 by means of two parallel guide bars 106 between a first position upstream of the collecting bin 103 (such as shown in Figure 13), and a second position above the collecting bin 103. The ends of the guide bars are mounted on a support frame 107. The main frame 102 comprises two columns 108 along which the support frame with the grabbing device 104 can be moved vertically.

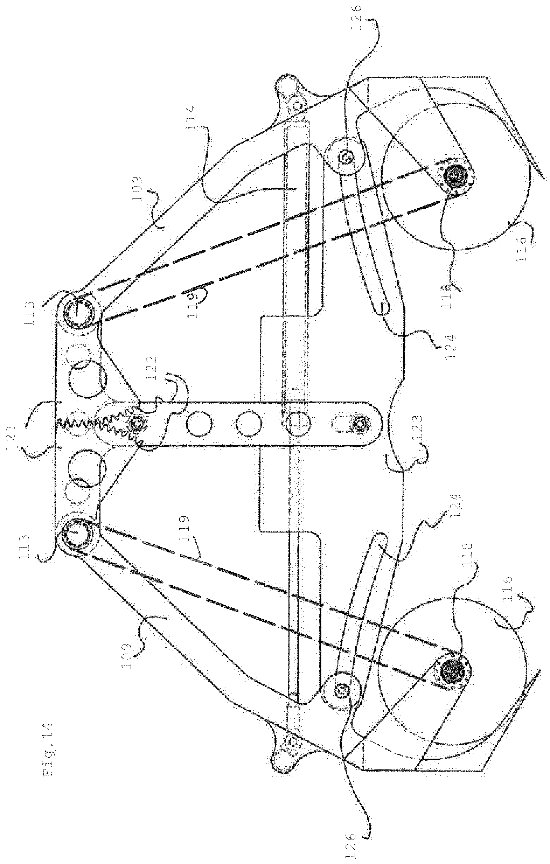

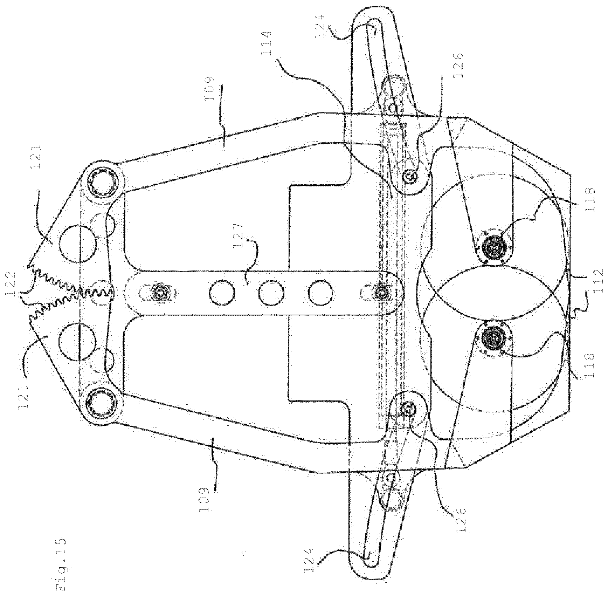

The grabbing device is shown in side view in Figures 14 and 15. The grabber is provided with two similar grabber components 109 arranged in mirrow image, which in side view are J-shaped or L-shaped with the bottom cutting edges 112 facing one another. The two grabber components 109 each have a pivot 113 and can be rotated between an open position, where the cutting edges 112 have been moved apart (Figure 14), and a closed position where the cutting edges 112 abut against one another (Figure 15), using a hydraulic cylinder 114 set between the two grabber components 109.

The two grabber components 109 are provided with a row of circular saws 116 inside a grabbing zone 117 enclosed by the grabber components 109. The two rows are parallel. The circular saws 116 have a common drive shaft 118 for each row, which is driven by a driving gear (not shown) by means of a drive belt 119 (Figure 14). The circular saws of one row are positioned slightly displaced axially direction vis-à-vis the circular saws of the other row, so that in side view the circular saws 116 of one row, such as shown in Figure 15, partially overlap with the circular saws 116 of the oher row in the closed position of the grabbing device 104.

The two grabber components 109 are provided with a toothed gear 121 extending from the pivot 113 in the direction of the toothed gear 121 of the other grabber component 109. The toothed gears 121 are provided with teeth 122 of such curvature and length that the two sets of teeth 122 mesh together as the grabber components 109 are moved between the open position and the closed position. The movements of the two grabber components 109 are synchronised as a result.

The grabbing device 104 comprises a base frame 123 with a slotted guide 124 for the two grabber components 109. The two grabber components 109 are provided with an arm with a roller guide 126 which can be moved in its transverse direction by means of the slotted guide 124 in question. As the grabber components 109 are moved between the open position and the closed position, the grabber components 109 are moved vertically by means of the respective slotted guide 124 such that the cutting edges 112 follow an essentially horizontal path. The grabbing device 104 thus creates a level horizontal cutting face at the top of a bale or block and it is enabled to scrape the last remaining scraps of feed off a floor surface in an effective manner.

The grabbing device 104 further comprises a T-shaped centre section 127, which with its two top ends is connected to the pivots 113 of the grabber components 109 and which by means of a vertical slotted guide 128 moves up and down with the grabber components 109 vis-à-vis the base frame 123.

The floor of the collecting bin 103 is formed by an outfeed conveyor or chain conveyor 131, which protrudes on an outfeed side 132 of the collecting bin 103 for some distance beyond the outfeed bin 103. The collecting bin 103 is provided on both sides with a mounting plate 133, which at its end is provided with a roller guide 134. This roller guide 134 falls into a vertical slot 136 in the respective column 108 of the main frame 102. By means of this vertical guide the collecting bin 103 can be moved up and down vertically between a low collecting position, such as shown in Figure 13, and a higher outfeed position for feeding out feed, in which process the feed in the collecting bin 103 is fed out by the outfeed conveyor 131, for instance into a mixing bin of mixing robot located underneath the outfeed conveyor 131.

The two horizontal guide bars 106 for the horizontal movement of the grabbing device 104 are supported by the support frame 107, which also comprises a roller guide 137 with which the support frame 107 can be moved up and down by means of the vertical slot 136. The two guide bars 106 are mounted on a head plate 138 with a top and a bottom roller guide 139, 140, which can be moved back and forth horizontally by means of two horizontal rails 142 of the support frame 107. This way the grabbing device 104 can also be moved back and forth horizontally in transverse direction in order to be aligned with a row of bales in a low position where necessary. When a bale or block is off centre, one of the grabber components 109 will be the first to hit the bale in question as the grabbing device 104 closes. The grabbing device 104 and the head plate 138 will then be moved sideways by means of the horizontal rails 142 until the second grabber component 109 also hits the bale, whereupon the grabbing device is closed further to remove a layer of feed from the bale. Thus it is prevented that the bale is moved sideways or pushed apart as the grabbing device 104 closes.

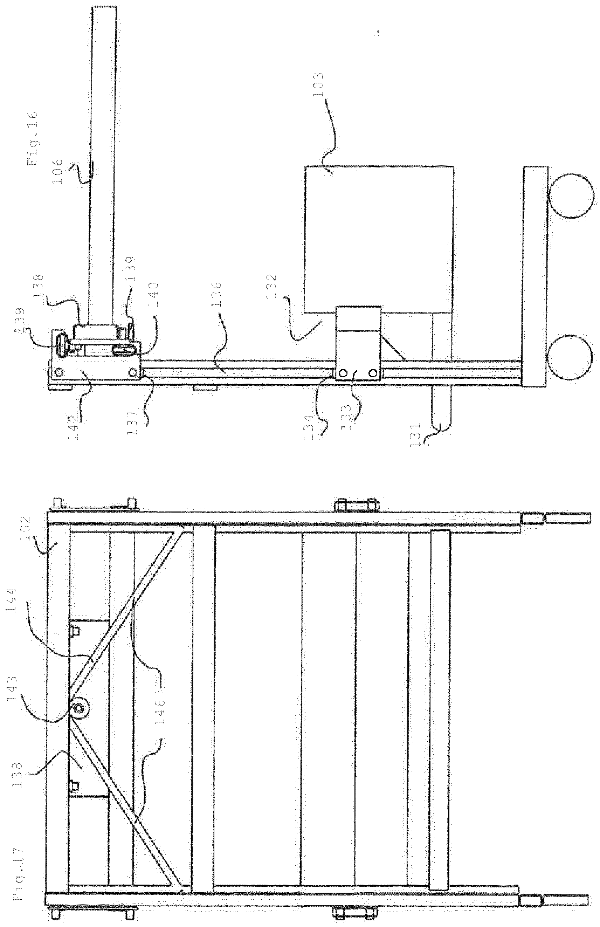

When the grabbing device 104 next is moved back upwards to the position above the collecting bin 103, the grabbing device 104 has to be recentred vis-à-vis the collecting bin 103. To this end the head plate 138 on the side facing away from the grabbing device 104 is provided with a roller 143 (see Figure 17), which cooperates with a centring guide 144 in the main frame 102. The centring guide 144 is made up of two bars 146 having their top ends mounted together or side by side in the centre of the main frame 102 and which have their bottom ends mounted on the inside of the columns 108 of the main frame 102. When the grabbing device 104 is moved upwards, the roller 143 runs against the bars 146 and as a result the grabbing device with the head plate is guided to the centre by means of the rails 142 and centred as it is moved upwards.

The cross conveyor 101 comprises a plate 151 with an edge 152, which cooperates as a cross guide with a floor rail 153 in order to move the plate 151 sideways. The plate 151 can be moved across the rail with the aid of a driving gear.

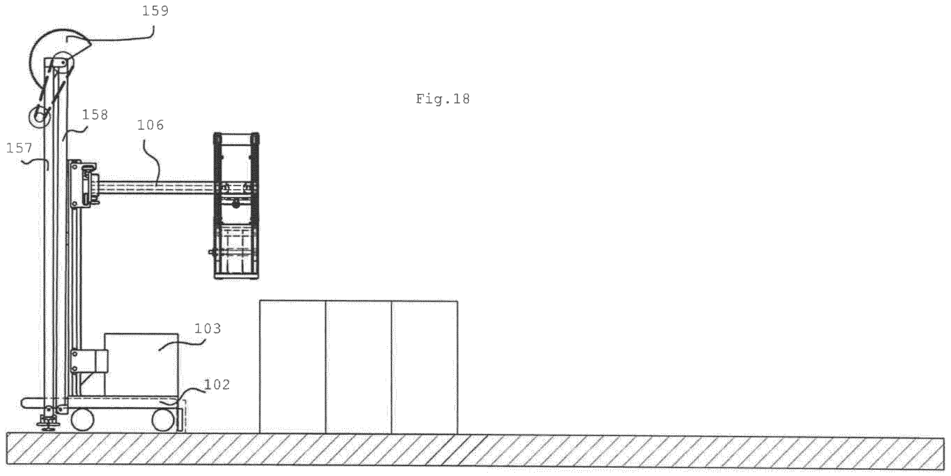

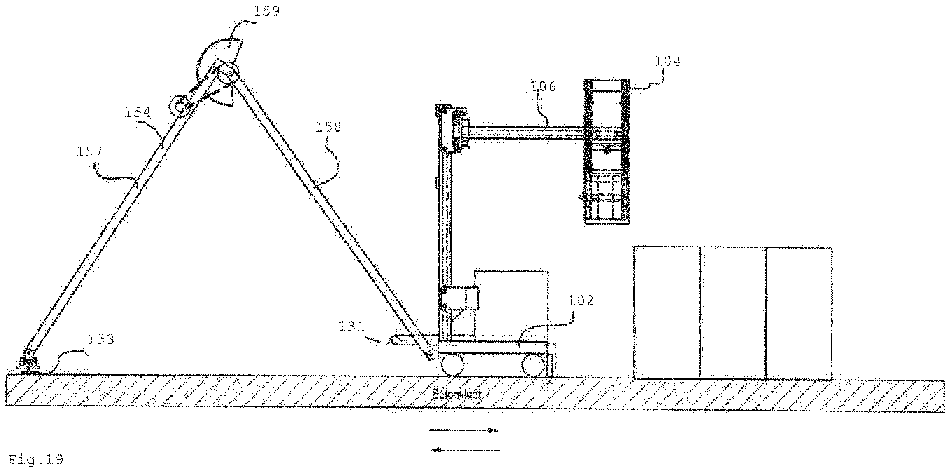

The cross conveyor 101 further comprises a pulling element in the form of a folding frame 154 for moving the main frame 102 which is provided with wheels 156. The geared motor is mounted on the folding frame 154. The main frame 102 in that case can be moved between a retracted position (see Figure 18), where the main frame 102 with the collecting bin 103 is disposed on the plate 151, and an extended position (see Figure 19), where the main frame 102 has been moved off the plate 151. The folding frame 154 comprises a first leg 157 with a bottom end hinged to the plate 151 and a top end hinged to the top end of the second leg 158, which has a bottom end hinged to the main frame 102. Such a cross conveyor enables the main frame with the grabbing device 104 and the collecting bin 103 to be precisely positioned in front of a row of bales or blocks. Other cross conveyors may also be used, if so desired.

When the folding frame 154 of the cross conveyor 101 is in the retracted state, the main frame 102 with the collecting bin 103 and the grabbing device 104 is disposed on the plate 151. The plate 151 can now be moved sideways with the main frame 102 along the floor rail 153. The main frame 102 can thus be positioned in front of a row of bales to be processed. The cross conveyor 101 enables precise positioning and alignment with the bales of the main frame 102, so that the centre of the main frame 102 is as fully as possible in line with the centre of the bales to be processed.

When the main frame 102 is placed in line with the row of bales to be processed, the folding frame 154 of the cross conveyor 101 can be extended, with the main frame 102 being pushed off the plate 151 and positioned immediately in front of the bale to be processed. Next, by means of the horizontal guide bars 106 the grabbing device 104 is moved to a position above the bale to be processed. The grabbing device 104 can now be opened. Figure 13 shows the grabbing device 104 in this position, albeit without a bale.

The opened grabbing device 104 can now be lowered over a bale to a depth sufficient for removing a desired quantity of feed from the top side of the bale. Next, the grabbing device 104 is closed. When during the closing one grabber component 109 hits the bale before the other grabber component 109, the first grabber component 109 will first pull the other one towards it before the circular saws 106 of the grabber component 109 penetrate into the bale. In that process the grabbing device 104 will be moved slightly sideways in its entirety with the head plate 138 along the two horizontal rails 142 in the support frame 139. This way the circular saws 116 of the two grabber components 109 are enabled to penetrate into the bale simultaneously without displacing the bale. As the grabbing device 104 closes further, the circular saws 116 are rotatingly driven and the feed which is between the grabber components 109 in the grabbing zone 117 is separated.

When the grabbing device 104 is completely closed, the bottom cutting edges 112 of the two grabber components 109 abut against one other and the grabbing zone 117 enclosed by the grabber is filled with separated feed. Now the support frame 107 is moved upwards with the guide bars 106 and the grabbing device 104. In this process the roller 143 at the back of the head plate 138 (Figure 17) is guided through the bars 146 of the centring guide to the centre of the main frame 102, causing the grabbing device 104 to be precisely re-centred vis-à-vis the main frame 102 and the collecting bin 103. The grabbing device 104 is moved backwards along the guide bars 106 until the grabbing device 104 is suspended above the collecting bin 103 and can be opened to dump the separated feed into the collecting bin 103.

The grabbing device 104 can now be moved in the same way to remove a new quantity from the same bale or from a different bale. If necessary, the main frame 102 can first be pulled onto the plate 151 of the cross conveyor 101 in order to then be positioned in front of a different row of bales or blocks.

The main frame 102 and/or the collecting bin 103 and/or the grabbing device 104 can be provided with weighing means for precise updating of the quantities of feed dosed. A user or an automated control unit is able to compare the quantities weighed with a previously entered desired composition so as to control the system on the basis of the comparative data.

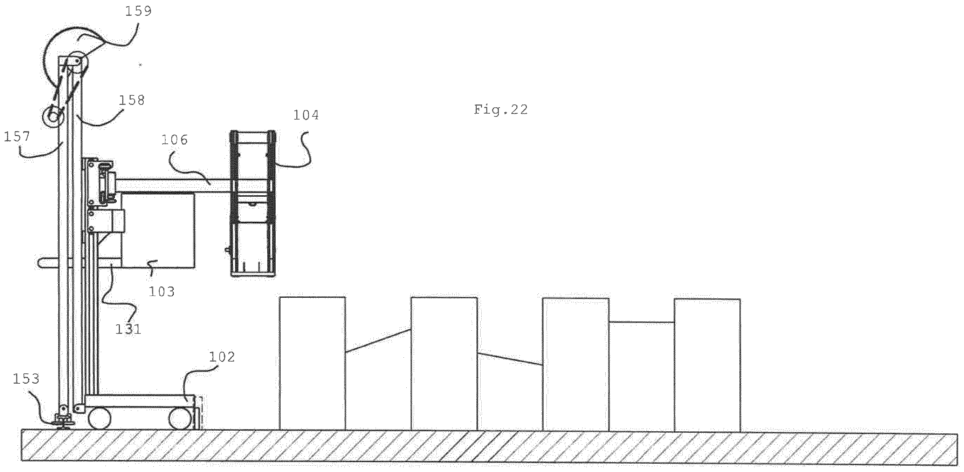

When sufficient quantities of all components have been removed and the collecting bin 103 is filled with the desired feed composition, the collecting bin 103 can be emptied. To that end the main frame 102 is pulled by the folding frame 154 onto the plate 151. The grabbing device 104 is moved to the end of the guide bars 106 in order to provide room for the collecting bin 103 which has been moved upwards. The apparatus (without the grabbing device 104) is shown in this position in Figure 22.

If necessary, the plate 151 with the main frame 102 and the collecting bin 103 can be moved sideways to position the whole in front of a mixing bin or mixing robot, with the free edge of the outfeed conveyor 131 being positioned above the mixing bin. Next, the outfeed conveyor 131 can be put in action, with the collected feed from the collecting bin 103 being put into the mixing bin. The mixing bin can mix the feed further and transport it to a stable and dose it to the livestock present there in a conventional manner.

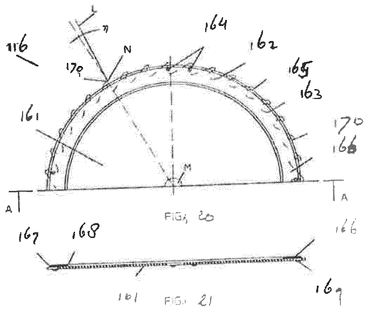

Figures 20 and 21 show an individual circular saw 116. In the shown embodiment the saw 116 comprises a standard circular saw blade 161 with a sawing edge 162 provided with teeth 163. The usual teeth 164 (represented as a dotted line) with saw teeth 165 are covered by a flat ring 166 with chamfered inner and outer sides 167, 168. The flat ring 166 is connected to the saw blade 161 with bolts 169. The tips of the saw teeth 165 are provided with cutting edges 170, which protrude from beneath the flat ring 166 in a desired - optionally adjustable - length. Because of the teeth's short length the risk of the saw 116 getting stuck is greatly reduced or even eliminated. The cutting edges 170 are set at a slight forward angle in the direction of rotation R, as a result of which the angle η between the extension L of the cutting edge 170 and the radial line between the centre M of the saw blade and the outermost angular tip N of the saw tooth is a sharp angle, for instance an angle of 0 - 25 degrees.

Instead of an adjusted standard saw, the saw blade of the circular saw can have been configured directly with the desired specific teeth, so that the ring 166 is superfluous.

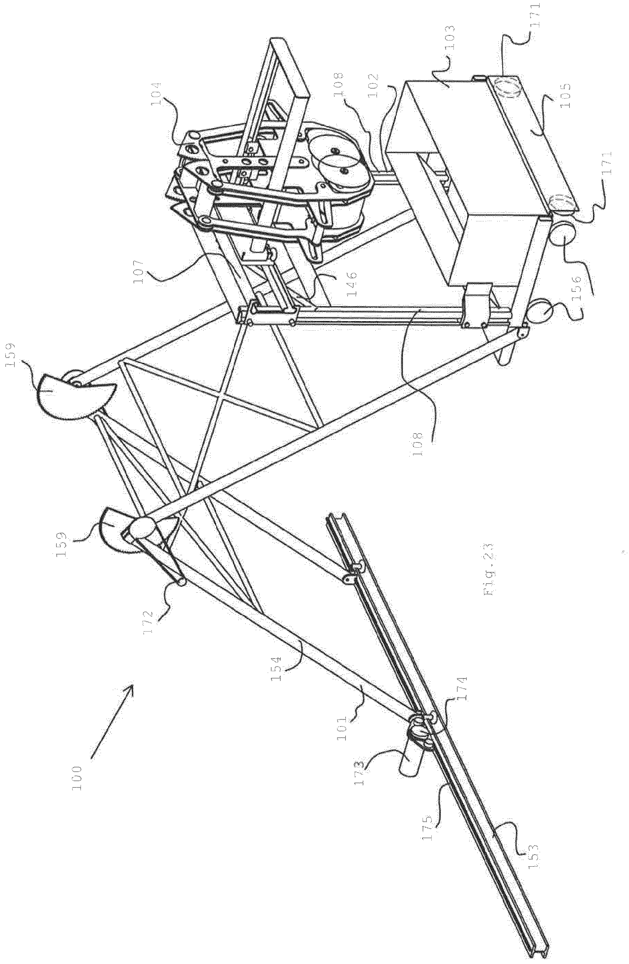

Another embodiment is shown in Figure 23. This corresponds to the embodiment of Figure 13, except that the version of the cross conveyor in this embodiment does not comprise a plate. Instead, the collecting bin comprises two transverse wheels 171. Figure 23 shows the collecting bin 103 in the low loading position, with the transverse wheels 171 slightly higher than the wheels 156.

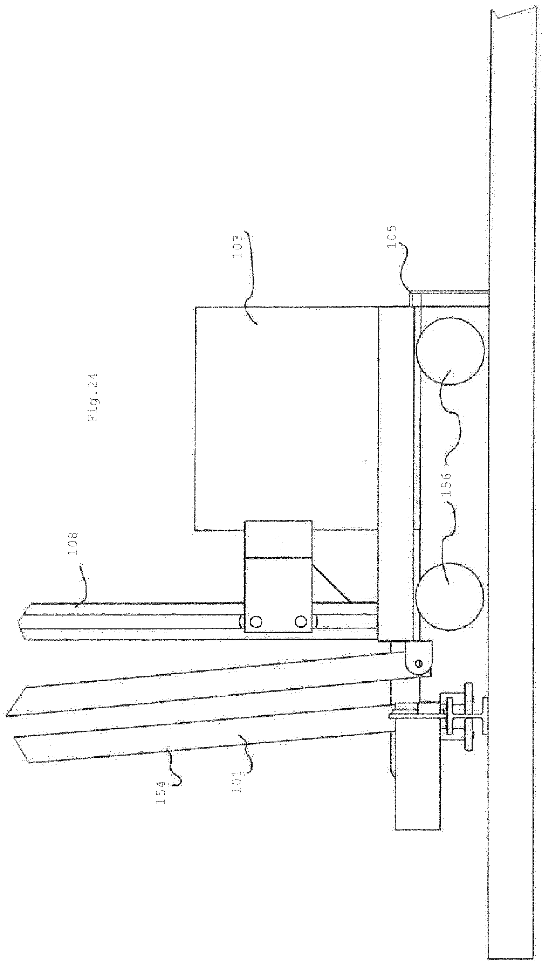

When the collecting bin 104 is filled, the folding frame 154 is retracted and the main frame 102 is positioned immediately in front of the floor rail 153. The collecting bin 103 can then be lowered still further vis-à-vis the main frame, in which process the transverse wheels 171 are placed on the floor, whereupon the main frame 102 with the wheels 156 can be lifted (see Figure 24). The collecting bin 103 can now be moved in transverse direction along the floor rail 153 in order to be positioned in front of a next row of bales or blocks of feed. On the side facing away from the folding frame 154, the collecting bin 103 comprises a front plate 105, for instance a rubber strip, which can be moved upwards by means of a transmission (not shown) when the folding frame 154 is retracted. When the folding frame is extended, the front plate 105 is moved downwards again, so that the plate sweeps across the floor and pushes loose feed in the direction of the bales.

The folding frame 154 comprises a toothed segment 159, which cooperates with a driving gear 172 to have the two legs 157, 158 unfold in a controlled manner as the folding frame 154 unfolds.

The folding frame 154 can be moved along the floor rail 153 with the aid of a driving gear. The driving gear can for instance comprise a geared motor 173, with a chain wheel 174 mounted on the motor shaft. Over the chain wheel 174 runs a driving chain 175, which is as long as the floor rail 153 and connected to the floor rail 153 at its ends by means of a tension gear. When the chain wheel 174 is driven by the motor, the folding frame 154 is moved along the driving chain 175. The folding frame 154 of the embodiment of Figure 13 can likewise be configured with such a driving gear.

## Claims

1. Apparatus (1; 101) for processing feed (2) comprising:
- a main frame (3; 102);
- a collecting bin (9; 103);
- a grabbing device (14; 104) which can be moved vertically,
wherein the collecting bin and the grabbing device are supported by the main frame, **characterized in that** the apparatus is provided with a cross conveyor (101) for moving the main frame (102) with the collecting bin (103) and the grabbing device (104) sideways.

2. Apparatus according to claim 1, wherein the grabbing device and/or the collecting bin can be moved horizontally between a first position, where the grabber is suspended above the collecting bin, and a second position, where the grabber can be positioned above a bale or block.

3. Apparatus according to claim 1 or 2, wherein the grabbing device comprises two grabber components (17; 109), such as grabber components which are L-shaped or J-shaped in side view, with bottom edges (112) facing one another, wherein the two grabber components can be moved vis-'a-vis one another between an open position, where the bottom edges have been moved apart, and a closed position, where the bottom edges essentially abut against one other and the grabber components enclose a grabbing zone (117), wherein at least one of the grabber components is provided with one or more separating means (116) inside a grabbing zone enclosed by the grabber components.

4. Apparatus according to claim 3, wherein the movement of the grabber components (109) between the open position and the closed position is guided along a guide (124) such that the cutting edges of the claws on the under-side move along an essentially straight horizontal surface.

5. Apparatus according to any one of the preceding claims 3 or 4, wherein the separating means comprise one or more knives (116) .

6. Apparatus according to claim 5, wherein the knives are made up of a row of parallel circular knives or circular saws (116) on a common drive shaft (118).

7. Apparatus according to claim 6, wherein the two grabber components (109) are provided with a row of parallel circular knives or circular saws (116), wherein in the closed position of the grabbing device (104) the circular saws of one row partially overlap with the circular saws of the other row in side view of the grabbing device.

8. Apparatus according to any one of the preceding claims 3 - 7, wherein the two grabber components (109) can each be tilted around their own pivot (113), with the two pivots being parallel and with the two grabber components being provided with a toothed segment (121) extending from the pivot in the direction of the toothed segment (121) of the other grabber component (109), wherein the two toothed segments (121) are provided in mirror image with teeth (122) of such curvature and length that the two sets of teeth mesh together as the grabber components move between the open position and the closed position.

9. Apparatus according to any one of the preceding claims, wherein the collecting bin (103) has a bottom comprising an outfeed conveyor (131), which continues on an outfeed side of the collecting bin outside the outfeed bin.

10. Apparatus according to any one of the preceding claims, wherein the collecting bin (103) can be moved, for instance tilted or lifted, from a collecting position to an outfeed position for feeding out feed.

11. Apparatus according to any one of the preceding claims, wherein the grabbing device (104) when in a low position can be moved in transverse direction.

12. Apparatus according to claim 10, wherein the main frame (102) is provided with a centering guide (146) for centering the grabbing device (104) by means of a horizontal guide (142) vis-'a-vis the main frame when the grabbing device is moved vertically upwards.

13. Apparatus according to claim 12, provided with a brake for blocking movement along the horizontal guide (142) as the grabbing device (104) is moved downwards.

14. Apparatus according to claim 1, wherein the cross conveyor (101) comprises an essentially horizontal plate (151) which can be moved along a guide, such as a floor rail (153).

15. Apparatus according to claim 14, wherein the main frame (102) is provided with wheels (156) and wherein the apparatus comprises a pulling element (154) for moving the main frame between a retracted position, where the main frame is near the floor rail (153), and an extended position, where the main frame has been moved away from the floor rail (153).

16. Apparatus according to claim 15, wherein the pulling element comprises a folding frame (154), which pulls towards the floor rail (153) as the main frame (102) is retracted and pushes away from the floor rail as the main frame is extended.

17. Apparatus according to claim 16, wherein the folding frame (154) comprises a first leg (157) with a bottom end which can be moved along the floor rail (153), and a top end hinged to the top end of a second leg (158), which has a bottom end hinged to the main frame (102).

18. Apparatus according to any one of the preceding claims, wherein the cross conveyor is provided with a plate which can be moved along the floor rail (153), onto which the main frame (102) can be disposed.

19. Apparatus according to any one of the preceding claims, wherein the main frame is provided with wheels with a direction of travel transverse to the floor rail and wherein the collecting bin is provided with wheels with a direction of travel parallel with the floor rail, wherein in a loading position of the collecting bin the wheels of the main frame are supported by the surface, while the wheels of the collecting bin are clear of the ground, wherein the collecting bin can be moved downwards to push the main frame upwards, so that the wheels of the collecting bin are supported by the surface, while the wheels of the main frame are clear of the ground.

20. Apparatus according to any one of the preceding claims, wherein the main frame (102), the collecting bin (103) and/or the grabbing device (104) are provided with one or more weighing means.

21. Apparatus according to any one of the preceding claims, wherein the apparatus (1) is connected to a power cable (46) which can be rolled automatically and is pivotably connected to a suspension means.

## Patentansprüche

1. Vorrichtung (1; 101) zur Behandlung von Futter (2), die aufweist:
einen Hauptrahmen (3; 102);
einen Sammelbehälter (9; 103);
eine Greifvorrichtung (14; 104), die vertikal bewegt werden kann,
wobei der Sammelbehälter und die Greifvorrichtung durch den Hauptrahmen gestützt werden, **dadurch gekennzeichnet, dass** die Vorrichtung mit einem Querförderer (101) zum Seitwärtsbewegen des Hauptrahmens (102) mit dem Sammelbehälter (103) und der Greifvorrichtung (104) versehen ist.

2. Vorrichtung nach Anspruch 1, wobei die Greifvorrichtung und/oder der Sammelbehälter zwischen einer ersten Position, in der der Greifer über dem Sammelbehälter aufgehängt ist, und einer zweiten Position, in der der Greifer über einem Ballen oder Block positioniert werden kann, waagrecht bewegt werden kann.

3. Vorrichtung nach Anspruch 1 oder 2, wobei die Greifvorrichtung zwei Greiferkomponenten (17; 109), wie zum Beispiel Greiferkomponenten, die in Seitenansicht L-förmig oder J-förmig sind, mit einander zugewandten Unterkanten (112) aufweist, wobei die beiden Greiferkomponenten zwischen einer offenen Position, in der die Unterkanten auseinander bewegt worden sind, und einer geschlossenen Position, in der die Unterkanten im Wesentlichen aneinander liegen und die Greiferkomponenten eine Greifzone (117) umschließen, relativ zueinander bewegt werden können, wobei mindestens eine der Greiferkomponenten mit einer oder mehreren Trenneinrichtungen (116) innerhalb einer von den Greiferkomponenten umschlossenen Greifzone versehen ist.

4. Vorrichtung nach Anspruch 3, wobei die Bewegung der Greiferkomponenten (109) zwischen der offenen Position und der geschlossenen Position entlang einer Führung (124) so geführt wird, dass sich die Schneidkanten der Klauen auf der Unterseite entlang einer im Wesentlichen geraden waagrechten Fläche bewegen.

5. Vorrichtung nach einem der vorstehenden Ansprüche 3 oder 4, wobei die Trenneinrichtungen ein oder mehrere Messer (116) aufweisen.

6. Vorrichtung nach Anspruch 5, wobei die Messer aus einer Reihe paralleler Kreismesser oder Kreissägen (116) auf einer gemeinsamen Antriebswelle (118) gebildet sind.

7. Vorrichtung nach Anspruch 6, wobei die beiden Greiferkomponenten (109) mit einer Reihe paralleler Kreismesser oder Kreissägen (116) versehen sind, wobei sich in der geschlossenen Position der Greifvorrichtung (104) die Kreissägen einer Reihe mit den Kreissägen der anderen Reihe in Seitenansicht der Greifvorrichtung teilweise überdecken.

8. Vorrichtung nach einem der vorstehenden Ansprüche 3 bis 7, wobei die beiden Greiferkomponenten (109) jeweils um ihre eigene Schwenkachse (113) gekippt werden können, wobei die beiden Schwenkachsen parallel sind und wobei die beiden Greiferkomponenten mit einem gezahnten Segment (121) versehen sind, das sich von der Schwenkachse in Richtung des gezahnten Segments (121) der anderen Greiferkomponente (109) erstreckt, wobei die beiden gezahnten Segmente (121) spiegelbildlich mit Zähnen (122) solcher Krümmung und Länge versehen sind, dass die beiden Sätze von Zähnen ineinander greifen, wenn sich die Greiferkomponenten zwischen der offenen Position und der geschlossenen Position bewegen.

9. Vorrichtung nach einem der vorstehenden Ansprüche, wobei der Sammelbehälter (103) einen unteren Teil mit einem Ausgabeförderer (131) hat, der sich auf einer Ausgabeseite des Sammelbehälters außerhalb des Ausgabebehälters fortsetzt.

10. Vorrichtung nach einem der vorstehenden Ansprüche, wobei der Sammelbehälter (103) aus einer Sammelposition in eine Ausgabeposition zum Ausgeben von Futter bewegt, beispielsweise gekippt oder angehoben, werden kann.

11. Vorrichtung nach einem der vorstehenden Ansprüche, wobei die Greifvorrichtung (104) in einer unteren Position in Querrichtung bewegt werden kann.

12. Vorrichtung nach Anspruch 10, wobei der Hauptrahmen (102) mit einer Zentrierführung (146) zum Zentrieren der Greifvorrichtung (104) mit Hilfe einer waagrechten Führung (142) relativ zum Hauptrahmen, wenn die Greifvorrichtung senkrecht nach oben bewegt wird, versehen ist.

13. Vorrichtung nach Anspruch 12, versehen mit einer Bremse zum Blockieren von Bewegung entlang der waagrechten Führung (142), während die Greifvorrichtung (104) nach unten bewegt wird.

14. Vorrichtung nach Anspruch 1, wobei der Querförderer (101) eine im Wesentlichen waagerechten Platte (151) aufweist, die entlang einer Führung, wie zum Beispiel einer Bodenschiene (153), bewegt werden kann.

15. Vorrichtung nach Anspruch 14, wobei der Hauptrahmen (102) mit Rädern (156) versehen ist und wobei die Vorrichtung ein Zugelement (154) zum Bewegen des Hauptrahmens zwischen einer eingefahrenen Position, in der sich der Hauptrahmen nahe der Bodenschiene (153) befindet, und einer ausgefahrenen Position, in der der Hauptrahmen von der Bodenschiene (153) wegbewegt worden ist, aufweist.

16. Vorrichtung nach Anspruch 15, wobei das Zugelement einen Klapprahmen (154) aufweist, der sich beim Einfahren des Hauptrahmens (102) zur Bodenschiene (153) zieht und sich beim Ausfahren des Hauptrahmens von der Bodenschiene wegdrückt.

17. Vorrichtung nach Anspruch 16, wobei der Klapprahmen (154) einen ersten Schenkel (157) aufweist mit einem unteren Ende, das entlang der Bodenschiene (153) bewegt werden kann, und einem oberen Ende, das am oberen Ende eines zweiten Schenkels (158) gelenkig angebracht ist, der ein am Hauptrahmen (102) gelenkig angebrachtes unteres Ende hat.

18. Vorrichtung nach einem der vorstehenden Ansprüche, wobei der Querförderer mit einer Platte versehen ist, die entlang der Bodenschiene (153) bewegt werden kann und auf der der Hauptrahmen (102) angeordnet sein kann.

19. Vorrichtung nach einem der vorstehenden Ansprüche, wobei der Hauptrahmen mit Rädern mit einer Fahrtrichtung quer zur Bodenschiene versehen ist und wobei der Sammelbehälter mit Rädern mit einer Fahrtrichtung parallel zur Bodenschiene versehen ist, wobei in einer Beladeposition des Sammelbehälters die Räder des Hauptrahmens durch den Untergrund gestützt werden, während die Räder des Sammelbehälters bodenfrei sind, wobei der Sammelbehälter nach unten bewegt werden kann, um den Hauptrahmen nach oben zu drücken, so dass die Räder des Sammelbehälters durch den Untergrund gestützt werden, während die Räder des Hauptrahmens bodenfrei sind.

20. Vorrichtung nach einem der vorstehenden Ansprüche, wobei der Hauptrahmen (102), der Sammelbehälter (103) und/oder die Greifvorrichtung (104) mit einer oder mehreren Wägeeinrichtungen versehen ist.

21. Vorrichtung nach einem der vorstehenden Ansprüche, wobei die Vorrichtung (1) mit einem Stromkabel (46) verbunden ist, das automatisch aufgerollt werden kann und schwenkbar mit einer Aufhängungseinrichtung verbunden ist.

## Revendications

1. Appareil (1 ; 101) pour traiter de l'alimentation (2) comprenant :
- un cadre principal (3 ; 102) ;
- une benne collectrice (9 ; 103) ;
- un dispositif de préhension (14 ; 104) qui peut être déplacé verticalement, dans lequel la benne collectrice et le dispositif de préhension sont supportés par le cadre principal, **caractérisé en ce que** l'appareil est pourvu d'un convoyeur transversal (101) destiné à déplacer le cadre principal (102) avec la benne collectrice (103) et le dispositif de préhension (104) latéralement.

2. Appareil selon la revendication 1, dans lequel le dispositif de préhension et/ou la benne collectrice peuvent être déplacés horizontalement entre une première position, où le préhenseur est suspendu au-dessus de la benne collectrice, et une seconde position, où le préhenseur peut être positionné au-dessus d'une balle ou d'un bloc.

3. Appareil selon la revendication 1 ou 2, dans lequel le dispositif de préhension comprend deux composants de préhenseur (17 ; 109), tels que des composants de préhenseur qui sont en forme de L ou en forme de J dans une vue latérale, avec des bords bas (112) en regard l'un de l'autre, dans lequel les deux composants de préhenseur peuvent être déplacés relativement l'un à l'autre entre une position ouverte, où les bords bas ont été écartés, et une position fermée, où les bords bas butent essentiellement l'un contre l'autre, et les composants de préhenseur enserrent une zone de préhension (117), dans lequel au moins l'un des composants de préhenseur est pourvu d'un ou de plusieurs moyens de séparation (116) à l'intérieur d'une zone de préhension enserrée par les composants de préhenseur.

4. Appareil selon la revendication 3, dans lequel le mouvement des composants de préhenseur (109) entre la position ouverte et la position fermée est guidé le long d'un guide (124) de sorte que les bords de coupe des mâchoires sur le dessous se déplacent le long d'une surface horizontale essentiellement droite.

5. Appareil selon l'une quelconque des revendications 3 ou 4 précédentes, dans lequel les moyens de séparation comprennent un ou plusieurs couteaux (116).

6. Appareil selon la revendication 5, dans lequel les couteaux sont constitués d'une rangée de couteaux circulaires parallèles ou de scies circulaires (116) ou d'un arbre d'entraînement commun (118).

7. Appareil selon la revendication 6, dans lequel les deux composants de préhenseur (109) sont pourvus d'une rangée de couteaux circulaires parallèles ou de scies circulaires (116), dans lequel dans la position fermée du dispositif de préhension (104), les scies circulaires d'une rangée chevauchent partiellement les scies circulaires de l'autre rangée dans une vue latérale du dispositif de préhension.

8. Appareil selon l'une quelconque des revendications 3 à 7 précédentes, dans lequel les deux composants de préhenseur (109) peuvent chacun être inclinés autour de leur propre pivot (113), les deux pivots étant parallèles et conjointement avec les deux composants de préhenseur étant pourvus d'un segment denté (121) s'étendant depuis le pivot dans la direction du segment denté (121) de l'autre composant de préhenseur (109), dans lequel les deux segments dentés (121) sont pourvus en image miroir de dents (122) de courbure et de longueur telles que les deux jeux de dents s'engrènent ensemble à mesure que les composants de préhenseur se déplacent entre la position ouverte et la position fermée.

9. Appareil selon l'une quelconque des revendications précédentes, dans lequel la benne collectrice (103) comporte un bas comprenant un convoyeur de sortie (131), qui se poursuit sur un côté de sortie de la benne collectrice à l'extérieur de la benne de sortie.

10. Appareil selon l'une quelconque des revendications précédentes, dans lequel la benne collectrice (103) peut être déplacée, par exemple inclinée ou soulevée, d'une position de collecte à une position de sortie visant à sortir l'alimentation.

11. Appareil selon l'une quelconque des revendications précédentes, dans lequel le dispositif de préhension (104), lorsqu'il est dans une position basse, peut être déplacé dans une direction transversale.

12. Appareil selon la revendication 10, dans lequel le cadre principal (102) est pourvu d'un guide de centrage (146) destiné à centrer le dispositif de préhension (104) au moyen d'un guide horizontal (142) relativement au cadre principal lorsque le dispositif de préhension est déplacé verticalement vers le haut.

13. Appareil selon la revendication 12, pourvu d'un frein destiné à bloquer un mouvement le long du guide horizontal (142) à mesure que le dispositif de préhension (104) est déplacé vers le bas.

14. Appareil selon la revendication 1, dans lequel le convoyeur transversal (101) comprend une plaque essentiellement horizontale (151) qui peut être déplacée le long d'un guide, tel qu'un rail au sol (153).

15. Appareil selon la revendication 14, dans lequel le cadre principal (102) est pourvu de roues (156) et dans lequel l'appareil comprend un élément de traction (154) destiné à déplacer le cadre principal entre une position rétractée, où le cadre principal est près du rail au sol (153), et une position étendue, où le cadre principal a été éloigné du rail au sol (153).

16. Appareil selon la revendication 15, dans lequel l'élément de traction comprend un cadre de pliage (154), qui tire vers le rail au sol (153) à mesure que le cadre principal (102) est rétracté et pousse en éloignement du rail au sol à mesure que le cadre principal est étendu.

17. Appareil selon la revendication 16, dans lequel le cadre de pliage (154) comprend une première jambe (157) avec une extrémité basse qui peut être déplacée le long du rail au sol (153), et une extrémité haute articulée à l'extrémité haute d'une seconde jambe (158), qui a une extrémité basse articulée au cadre principal (102).

18. Appareil selon l'une quelconque des revendications précédentes, dans lequel le convoyeur transversal est pourvu d'une plaque qui peut être déplacée le long du rail au sol (153), sur lequel le cadre principal (102) peut être disposé.

19. Appareil selon l'une quelconque des revendications précédentes, dans lequel le cadre principal est pourvu de roues ayant une direction de déplacement transversal par rapport au rail au sol et dans lequel la benne collectrice est pourvue de roues avec une direction de déplacement parallèle au rail au sol, dans lequel dans une position de chargement de la benne collectrice, les roues du cadre principal sont supportées par la surface, alors que les roues de la benne collectrice sont dégagées du sol, dans lequel la benne collectrice peut être déplacée vers le bas pour pousser le cadre principal vers le haut, de sorte que les roues de la benne collectrice soient soutenues par la surface, alors que les roues du cadre principal sont dégagées du sol.

20. Appareil selon l'une quelconque des revendications précédentes, dans lequel le cadre principal (102), la benne collectrice (103) et/ou le dispositif de préhension (104) sont pourvus d'un ou de plusieurs moyens de pesée.

21. Appareil selon l'une quelconque des revendications précédentes, dans lequel l'appareil (1) est raccordé à un câble de puissance (46) qui peut être enroulé automatiquement et est raccordé en pivotement à un moyen de suspension.
